(19) Europäisches Patentamt
European Patent Office
Office européen des brevets

(11) Veröffentlichungsnummer: **0 128 399**
**B1**

(12) # EUROPÄISCHE PATENTSCHRIFT

(45) Veröffentlichungstag der Patentschrift: **04.07.90**

(51) Int. Cl.[5]: **C 04 B 28/14,** C 04 B 24/28

(21) Anmeldenummer: **84105725.0**

(22) Anmeldetag: **19.05.84**

(54) **Stützverbände und Verfahren zu ihrer Herstellung.**

(30) Priorität: **03.06.83 DE 3320217**

(43) Veröffentlichungstag der Anmeldung:
**19.12.84 Patentblatt 84/51**

(45) Bekanntmachung des Hinweises auf die Patenterteilung:
**04.07.90 Patentblatt 90/27**

(84) Benannte Vertragsstaaten:
**AT BE CH DE FR GB IT LI LU NL SE**

(56) Entgegenhaltungen:
**EP-A-0 005 902**
**WO-A-80/00705**
**DE-A-2 626 431**
**DE-A-2 651 505**
**DE-A-2 713 984**
**US-A-3 333 974**
**US-A-4 228 053**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Müller, Peter, Dr.**
**Im Kerberich 6**
**D-5068 Odenthal (DE)**
Erfinder: **Wagner, Kuno, Dr.**
**Am Kiesberg 8**
**D-5090 Leverkusen 1 (DE)**
Erfinder: **Wegner, Christian, Dr.**
**Roggendorfstrasse 67**
**D-5000 Koeln 80 (DE)**
Erfinder: **Schwabe, Peter, Dr.**
**Dudweiler Strasse 17**
**D-5090 Leverkusen 1 (DE)**

(56) Entgegenhaltungen:
**CHEMICAL ABSTRACTS, Band 92, Nr. 8, Februar 1980, Seite 311, Nr. 63584p, Columbus, Ohio, US; & JP - A - 79 119 528 (M.T.P. KASEI CO., LTD.) 17.09.1979**

**CHEMICAL ABSTRACTS, Band 93, 1980, Seite 279, Nr. 119284f, Columbus, Ohio, US; & JP - A - 80 42 281 (TOKIWA KASEI K.K.) 25.03.1980**

**EP 0 128 399 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft Stützverbände für medizinische Anwendungen auf Basis von Gips und Polyurethankunststoffen sowie Verfahren zu ihrer Herstellung.

Gebrannter Gips wird als wasserhärtbares Material weltweit für die verschiedensten Anwendungszwecke eingesetzt, z.B. in der Medizin in Form von Stützverbänden zur Ruhigstellung von Körperteilen oder als Modelliermasse. Dabei kommt Gips entweder direkt oder auf Trägergeweben zum Einsatz. Gebrannter Gips besitzt die theoretische chemische Zusammensetzung $CaSO_4 \cdot 0{,}5\ H_2O$ und geht—nach Tränken in Wasser—unter Abbinden in die chemische Zusammensetzung $CaSO_4 \cdot 2\ H_2O$ über. Dieser ausgehärtete Gips besitzt z.B. für die Anwendung in der Medizin gravierende Nachteile. Zum einen weist Gips eine mangelhafte Wasserbeständigkeit auf, zum anderen ist er so hart und spröde, daß oftmals die Stützverbände bzw. die Modelle bei mechanischer Beanspruchung brechen.

Beides führt durch dabei notwendig werdende Reparaturen zu hohen Kosten und verlängerter Behandlungsdauer. Es besteht daher schon lange der Wunsch, die medizinisch angewandten Gips-Systeme hinsichtlich ihrer Wasserfestigkeit und Bruchfestigkeit zu verbessern.

Bisher blieben auch alle Versuche, wie z.B. in GB—A—859 018 beschrieben, den Gips für die Anwendung im Bauwesen durch Tränken mit Salzlösungen, Bitumen oder Kunststoffemulsionen gegen Wassereinfluß zu schützen, erfolglos (vgl. dazu "Blick durch die Wirtschaft" vom 13.09.92, Nr. 175, Seite 7). Umso überraschender war der Befund, daß sich Gips mit wäßrigen Polyurethan(harnstoff)dispersionen, gegebenenfalls unter Zusatz von bis zu 20 Gew.-% Alkohol, ohne vorzeitige Koagulation der Dispersion anmischen läßt und nach dem Abbinden hinsichtlich Wasserfestigkeit und Bruchfestigkeit wesentlich verbesserte Eigenschaften aufweist.

GB—A—2 092 606 beschreibt die Verwendung eines Trägermaterials, welches mit einem Isocyanatgruppen enthaltenden Prepolymer versetzt und mit Wasser ausgehärtet wird, wobei jedoch kein Gips verwendet wird.

Gegenstand der Erfindung sind Stützverbände für medizinische Anwendungen auf Basis von Gips und Polyurethanen, erhältlich durch Einwirkung einer wäßrigen Dispersion eines Polyurethan(harnstoffs), die gegebenenfalls bis zu 20 Gew.-% (bezogen auf die Dispersion) eines Alkohols und gegebenenfalls bis zu 20 Gew.-% (bezogen auf die Dispersion) an weiteren Lösungsmitteln enthält, auf gebrannten Gips, der auf einem textilen Trägermaterial aufgebracht worden ist, und Abbinden des Gipses, gegebenenfalls unter Formgebung, unter Verdampfung der gegebenenfalls mitverwendeten Lösungsmittel.

Gegenstand der vorliegenden Erfindung ist auch ein Verfahren zur Herstellung von Stützverbänden für medizinische Anwendungen auf Basis von Gips und Polyurethanen, das dadurch gekennzeichnet ist, daß man eine wäßrige Dispersion eines Polyurethan(harnstoffs), die gegebenenfalls bis zu 20 Gew.-% (bezogen auf die Dispersion) eines Alkohols und gegebenenfalls bis zu 20 Gew.-% (bezogen auf Dispersion) an weiteren Lösungsmitteln enthält, auf gebrannten Gips, der auf einem textilen Trägermaterial aufgebracht worden ist, einwirken und den auf dem Trägermaterial aufgebrachten Gips, gegebenenfalls unter Formgebung, unter Verdampfung der gegebenenfalls mitverwendeten Lösungsmittel, abbinden läßt.

Vorzugsweise läßt man im erfindungsgemäßen Verfahren auf den gebrannten Gips eine wäßrige Polyurethan(harnstoff)dispersion mit einem Feststoffgehalt von 1 bis 60 Gew.-%, insbesondere 5 bis 50 Gew.-%, einwirken. Die Gesamtmenge an Wasser beträgt in der Regel 18 bis 400 Gew.-%, bevorzugt 30 bis 100 Gew.-%, besonders bevorzugt 35 bis 70 Gew.-%, bezogen auf gebrannten Gips.

Die im erfindungsgemäßen Verfahren zur Verbesserung der mechanischen Eigenschaften (insbesondere Verbesserung der Elastizität und Wasserbeständigkeit; Verminderung der Sprödigkeit) des Gipses eingesetzten Polyurethan(harnstoff)e weisen einen, die Dispergierbarkeit in Wasser gewährleistenden Gehalt an chemisch eingebauten hydrophilen Gruppen auf, und zwar in Form von (a) ionischen Gruppen und/oder (b) durch eine Neutralisationsreaktion in ionische Gruppen überführbaren Gruppen und/oder (c) Ethylenoxideinheiten ($—CH_2—CH_2—O$) innerhalb von in das Polyurethan(harnstoff)molekül eingebauten Polyetherketten.

Für das erfindungsgemäße Verfahren sind im Prinzip alle an sich bekannten, beim Auftrocknen klebfreie Filme bildenden wäßrigen Polyurethan(harnstoff)dispersionen geeignet, die—gegebenenfalls infolge eines Gehalts an Alkoholen sowie gegebenenfalls weiteren organischen Lösungsmitteln—weitgehend unempfindlich gegenüber Koagulation durch Elektrolyte sind. Wie sich zeigte, spiegeln sich die mechanischen Eigenschaften des Polyurethan(harnstoff)s, z.B. hinsichtlich Zufestigkeit und Bruchdehnung, auch in den Eigenschaften des ausgehärteten Verbundwerkstoffs wieder.

Für die Herstellung von Polyurethan(harnstoff)dispersionen in Wasser sind eine Reihe von Verfahren bekannt geworden. Eine zusammenfassende Darstellung findet sich z.B. bei D. Dieterich und H. Reiff in "Die Angewandte Makromolekulare Chemie", *26*, 1972, (Seiten 85—106), D. Dieterich et al. in "Angewandte Chemie", *82*, 1970, (Seite 53—63), D. Dieterich et al. in J. Oil Col. Chem. Assoc. 1970, *53*, (363—379), D. Dieterich in "Die Angewandte Makromolekulare Chemie", *98*, 1981, (Seite 133—158) sowie in "Chemie und Technologie makromolekularer Stoffe" (20, Veröffentlichung der Fachhochschule Aachen zum 9. Kolloquium am 8. Mai 1981 an der FH Aachen, Fachbereich Chemieingenieurwesen). In diesen Sammelreferaten wird auch eine umfassende Literaturübersicht gegeben. Im folgenden soll, falls nicht ausdrücklich anders vermerkt, der Begriff "Polyurethan" auch harnstoffgruppenhaltige Polymere, d.h. Polyurethanharnstoffe, mit einschließen.

Eines der in der Praxis bevorzugten Herstellungsverfahren für wäßrige Polyurethandispersionen besteht darin, daß ein in einem organischen Lösungsmittel gelöstes NCO-Präpolymeres mit einem Kettenverlängerungsmittel umgesetzt wird. Dabei enthält entweder das Präpolymere oder das Kettenverlängerungsmittel ionische oder zur Ionenbildung befähigte Gruppen. Im Laufe der Polyadditionsreaktion oder danach werden diese zur Ionenbildung befähigten Gruppen in ionische Gruppen übergeführt. Gleichzeitig oder auch anschließend erfolgt die Ausbildung der wäßrigen Dispersionen durch Zusatz von Wasser und Abdestillieren des organischen Lösungsmittels.

Wie schon erwähnt, können im erfindungsgemäßen Verfahren sowohl kationische als auch anionische und nicht-ionische Polyurethandispersionen verwendet werden. Vorzugsweise werden erfindungsgemäß solche wäßrigen Polyurethandispersionen eingesetzt, welche beim Auftrocknen Polyurethanfolien mit elastischen Eigenschaften liefern. Darunter sind insbesondere gummielastische oder mindestens kerbschlagzähe Polyurethane bzw. Polyharnstoffe oder Polyhydrazodicarbonamide zu verstehen, die eine Kugeldruckhärte unter 138 mPa (1400 kp/$cm^2$, 60 Sekunden nach DIN 53 456), vorzugsweise eine Shore-Härte D von weniger als 98, aufweisen. Für Verbundwerkstoffe mit speziellen Eigenschaften können selbstverständlich im Einzelfall auch Dispersionen härterer Polyurethane eingesetzt werden.

Für das erfindungsgemäße Verfahren geeignete wäßrige Polyurethandispersionen können, wie oben erläutert, ganz allgemein dann erhalten werden, wenn bei der Herstellung der Polyurethane Komponenten mitverwendet werden, welche ionische bzw. zur Ionenbildung befähigte Gruppen und daneben noch mindestens eine NCO-Gruppe bzw. mindestens ein mit Isocyanatgruppen reagierendes Wasserstoffatom aufweisen. Als Verbindungen dieser Art kommen, gegebenenfalls auch in Mischung, zum Beispiel die folgenden in Frage (siehe auch US—PS—3 756 992, US—PS—3 479 310 oder US—PS—4 108 814).

1. Verbindungen, die basische, mit wäßrigen Säuren neutralisierbare oder quaternierbare tertiäre Aminogruppen aufweisen:

a) Alkohole,
insbesondere alkoxylierte aliphatische, cycloaliphastische, aromatische und heterocyclische, sekundäre Amine, z.B. N,N - Dimethylethanolamin, N,N - Diethylethanolamin, N,N - Dibutylethanolamin, 1 - Dimethylamino - propanol - (2), N,N - Methyl - β - hydroxyethylanilin, N,N - Methyl - β - hydroxypropyl - anilin, N,N - Ethyl - β - hydroxyethyl - anilin, N,N - Butyl - β - hydroxyethylanilin, N - Oxethylpiperidin, N - Oxethylmorpholin, α - Hydroxyethylpyridin und γ - Hydroxyethylchinolin.

b) Diole und Triole,
insbesondere alkoxylierte aliphatische, cycloaliphatische, aromatische und heterocyclische primäre Amine, z.B. N - Methyl - diethanolamin, N - Butyl - diethanolamin, N - Oleyl - diethanolamin, N - Cyclohexyldiethanolamin, N - Methyl - diisopropanolamin, N - Cyclohexal - diisopropanolamin, N,N - Dioxethylanilin, N,N - Dioxyethyl - m - toluidin, N,N - Dioxyethyl - p - toluidin, N,N - Dioxypropyl - naphthylamin, N,N - Tetraoxethyl - aminopyridin, Dioxethylpiperazin, polyethoxyliertes Butyldiethanolamin, polypropoxyliertes Methyldiethanolamin (Mol.-Gew. 1000), polypropoxyliertes Methyldiethanolamin (Mol.-Gew.- 2000), Polyester mit tert.-Aminogruppen, Tri - [2 - hydroxypropyl - (1)] - amin, N,N - Di - n - (2,3 - dihydroxypropyl) - anilin, N,N' - Dimethyl - N,N' - bis - oxyethyl - hydrazin und N,N' - Dimethyl - N,N' - bis - oxypropyl - ethylenediamin.

c) Aminoalkohole,
z.B. durch Hydrierung erhaltene Additionsprodukte von Alkylenoxyd und Acrylnitril an primäre Amine, etwa N - Methyl - N - (3 - aminopropyl) - ethanolamin, N - Cyclohexyl - N - (3 - aminopropyl) - propanol - (2) - amin, N,N - Bis - (3 - amino - propyl) - ethanolamin und N - 3 - Aminopropyl - diethanolamin.

d) Amine,
z.B. N,N - Dimethylhydrazin, N,N - Dimethyl - ethylendiamin, 1 - Di - ethylamino - 4 - amino - pentan, α - Aminopyridin, 3 - Amino - N - ethylcarbazol, N,N - Dimethylpropylen - diamin, N - Amino - propyl - piperidin, N - Aminopropyl - morpholin, N - Aminopropyl - ethylen - imin und 1,3 - Bis - piperidino - 2 - amino - propan.

e) Diamine, Triamine, Amide,
insbesondere durch Hydrierung von Anlagerungsprodukten von Acrylnitril an primäre oder disekundäre Amine, z.B. Bis - (3 - aminopropyl) - methylamin, Bis - (3 - aminopropyl) - cyclohexylamin, Bis - (3 - aminopropyl) - anilin, Bis - (3 - aminopropyl) - toluidin, Diaminocarbazol, Bis - (aminopropoxethyl) - butylamin, Tris - (aminopropyl) - amin oder N,N' - Bis - carbonamidopropyl - hexamethylendiamin, sowie durch Anlagerung von Acrylamid an Diamine oder Diole erhältliche Verbindungen.

2. Verbindungen, die zu Quaternierungsreaktionen befähigte Halogenatome oder entsprechende Ester starker Säuren enthalten:

2 - Chlorethanol, 2 - Bromethanol, 4 - Chlorbutanol, 3 - Brompropanol, β - Chlorethylamin, 6 - Chlorhexylamin, Ethanolamin - schwefel - säureester, N,N - Bis - hydroxyethyl - N' - m - chlormethylphenylharnstoff, N - Hydroxyethyl - N' - chlorhexylharnstoff, Glycerinamino - chlorethylurethan, Chlor - acetyl - ethylendiamin, Bromacetyl - dipropylentriamin, Tri - chloracetyl - triethylentetramin, Glycerin - α - bromhydrin, polypropoxyliertes Glycerin - α - chlorhydrin, Polyester mit aliphatisch gebundenem Halogen oder 1,3 - Dichlorpropanol - 2.

An entsprechenden Isocyanaten seien erwähnt:

Chlorhexylisocyanat, m - Chlorphenyl - isocyanat, p - Chlorphenylisocyanat, Bis - chlormethyl - diphenylmethandiisocyanat, 2,4 - Diisocyanato - benzylchlorid, 2,6 - Diisocyanato - benzylchlorid, N - (4 - Methyl - 3 - isocyanatophenyl) - β - bromethylurethan.

3. Verbindungen, die zur Salzbildung befähigte Carbonsäure- oder Hydroxylgruppen aufweisen:

a) Hydroxy- und Mercapto - carbonsäuren:

Glykolsäure, Thioglykolsäure, Milchsäure, Trichlormilchsäure, Äpfelsäure, Dioxymaleinsäure, Dioxyfumarsäure, Weinsäure, Dioxyweinsäure, Schleimsäure, Zuckersäure, Zitronensäure, Glycerin - borsäure, Pentaerythrit - borsäure, Mannitborsäure, Salicylsäure, 2,6 - Dioxybenzoesäure, Protocatechusäure, α - Resorcylsäure, β - Resorcylsäure, Hydrochinon - 2,5 - dicarbonsäure, 4 - Hydroxyisophthalsäure, 4,6 - Dihydroxyisophthalsäure, Oxyterephthalsäure, 5,6,7,8 - Tetrahydro - naphthol - (2) - carbonsäure - (3), 1 - Hydroxynaphthoesäure - (2), 2,8 - Dihydroxynaphthoesäure - (3), β - Oxypropionsäure, m - Oxybenzoesäure, Pyrazolon-carbonsäure, Harnsäure, Barbitursäure, Resole und andere Formaldehyd-Phenolkondensationsprodukte,

b) Polycarbonsäuren:

Sulfondiessigsäure, Nitrilo - triessigsäure, Ethylendiamintetraessigsäure, Diglykolsäure, Thiodiglykolsäure, Methylen - bis - thioglykolsäure, Malonsäure, Oxalsäure, Bernsteinsäure, Glutarsäure, Adipinsäure, Maleinsäure, Fumarsäure, Gallussäure, Phthalsäure, Tetrachlorphthalsäure, Isophthalsäure, Terephthalsäure, Naphthalintetracarbonsäure - (1,4,5,8), o - Tolylimido - diessigsäure, β - Naphthylimido - diessigsäure, Pyridindicarbonsäure, Dithiodipropionsäure.

c) Aminocarbonsäuren:

Oxalursäure, Anilinoessigsäure, 2 - Hydroxycarbazolcarbonsäure - (3), Glycin, Sarkosin, Methionin, α - Alanin, β - Alanin, 6 - Aminocapronsäure, 6 - Benzoylamino - 2 - chlorcapronsäure, 4 - Amino - buttersäure, Asparaginsäure, Glutaminsäure, Histidin, Anthranilsäure, 2 - Ethylaminobenzoesäure, N - (2 - Carboxyphenyl) - aminoessigsäure, 2 - (3' - Amino - benzolsulfonyl - amino) - benzoesäure, 4 - Aminobenzoesäure, N - Phenylaminoessigsäure, 3,4 - Diaminobenzoesäure, 5 - Aminobenzol - dicarbonsäure, 5 - (4' - Aminobenzoyl - amino) - 2 - amino - benzoesäure.

d) Hydroxy- und Carboxy-sulfonsäuren:

2 - Hydroxyethansulfonsäure, Phenolsulfonsäure - (2), Phenolsulfonsäure - (3), Phenolsulfonsäure - (4), Phenoldisulfonsäure - (2,4), Sulfoessigsäure, m - Sulfobenzoesäure, p - Sulfobenzoesäure, Benzoesäure - (1) - disulfonsäure - (3,5), 2 - Chlor - benzoesäure - (1) - sulfonsäure - (4), 2 - Hydroxy - benzoesäure - (1) - sulfonsäure - (5), Naphthol - (1) - sulfonsäure, Naphthol - (1) - disulfonsäure, 8 - Chlornaphthol - (1) - disulfonsäure, Naphthol - (1) - trisulfonsäure, Naphthol - (2) - sulfonsäur (1), Naphthol - (2) - trisulfonsäure, 1,7 - Dihydroxynaphthalinsulfonsäure - (3), 1,8 - Dihydroxynaphthalindisulfonsäure - (2,4), Chromotropsäure, 2 - Hydroxynaphthoesäure - (3) - sulfonsäure - (6), 2 - Hydroxycarbazolsulfonsäure - (7).

e) Aminosulfonsäuren:

Amidosulfonsäure, Hydroxylamin - monosulfonsäure, Hydrazindisulfonsäure, Sulfanilsäure, N - Phenylaminomethansulfonsäure, 4,6 - Dichloranilin - sulfonsäure - (2), Phenylendiamin - (1,3) - disulfonsäure - (4,6), N-Acetylnaphthylamin - (1) - sulfonsäure - (3), Naphthylamin - (1) - sulfonsäure, Naphthylamin - (2) - sulfonsäure, Naphthylamindisulfonsäure, Naphthylamin - trisulfonsäure, 4,4' - Di - (p - aminobenzoyl - amino) - diphenylharnstoff - disulfonsäure - (3,3'), Phenylhydrazin - disulfonsäure - (2,5), 2,3 - Dimethyl - 4 - aminoazobenzol - disulfonsäure - (4',5), 4' - Aminostilbendisulfonsäure - (2,2') - 4 - azo - 4 - anisol, Carbazoldisulfonsäure - (2,7), Taurin, Methyltaurin, Butyltaurin, 3 - Amino - benzoesäure - (1) - sulfonsäure - (5), 3 - Amino - toluol - N - methan - sulfonsäure, 6 - Nitro - 1,3 - dimethylbenzol - 4 - sulfaminsäure, 4,6 - Diamino - benzol - disulfonsäure - (1,3), 2,4 - Diamino - toluol - sulfonsäure - (5), 4,4' - Diaminodiphenyl - disulfonsäure - (2,2'), 2 - Aminophenol - sulfonsäure - (4), 4,4' - Diaminodiphenylether - sulfonsäure - (2), 2 - Aminoanisol - N - methansulfonsäure, 2 - Amino - diphenylamin - sulfonsäure.

Als salzbildende Mittel kommen für die Gruppe 1 anorganische und organische Säuren sowie Verbindungen mit reaktiven Halogenatomen und entsprechende Ester starker Säuren in Betracht. Einige Beispiele für derartige Verbindungen sind:

Salzsäure, Salpetersäure, Unterphosphorige Säure, Amidosulfonsäure, Hydroxylaminmonosulfonsäure, Ameisensäure, Essigsäure, Glykolsäure, Milchsäure, Chloressigsäure, Bromessigsäureethylester, Sorbit-borsäure, Methylchlorid, Butylbromid, Dimethylsulfat, Diethylsulfat, Benzylchlorid, p-Toluol-sulfonsäuremethylester, Methylbromid, Ethylenchlorhydrin, Ethylenbromhydrin,

Glycerin - α - bromhydrin, Chloressigester, Chloracetamid, Bromacetamid, Dibromethan, Chlorbrombutan, Dibrombutan, Ethylenoxyd, Propylenoxyd, 2,3 - Epoxypropanol.

Die Verbindungen der Gruppe 2 können mit tertiären Aminen, aber auch mit Sulfiden oder Phosphinen quarterniert bzw. terniert werden. Es entstehen dann quaternäre Ammonium- und Phosphonium- bzw. ternäre Sulfoniumsalze.

Beispiele dafür sind unter anderem Trimethylamin, Triethylamin, Tributylamin, Pyridin, Triethanolamin sowie die unter Gruppe 1a und 1b aufgeführten Verbindungen, ferner Dimethylsulfid, Diethylsulfid, Thiodiglykol, Thiodiglykolsäure, Trialkylphosphine, Alkylarylphosphine und Triarylphosphine.

Für die Verbindungen der Gruppe 3 eignen sich anorganische und organische Basen als Salzbildner, z.B. Natriumhydroxid, Kaliumhydroxid, Kaliumcarbonat, Natriumhydrogencarbonat, Ammoniak, primäre, sekundäre und tertiäre Amine. Schließlich sei erwähnt, daß auch organische Phosphorverbindungen als Verbindungen, die zur Salzbildung fähig sind, in Betracht kommen und zwar sowohl einbaufähige basische Phosphine wie z.B. Diethyl - β - hydroxyethylphosphon, Methyl - bis - β - hydroxyethylphosphin, Tris - β - hydroxymethyl - phosphin, als auch Derivate, z.B. von Phosphinsäuren, Phosphonigsäuren, Phosphonsäuren sowie Ester der phosphorigen und der Phosphorsäure sowie deren Thioanaloge, z.B. Bis - (α - hydroxy - isopropyl) - phosphinsäure, Hydroxyalkanphosphonsäure oder Phosphorsäure - bis - glykolester.

Erfindungsgemäß geeignete kationische Polyurethane werden z.B. nach der DAS 1 270 276 erhalten, wenn beim Aufbau des Polyurethans mindestens eine Komponente mit einem oder mehreren basischen tertiären Stickstoffatomen mitverwendet wird und die basischen tertiären Stickstoffatome des Polyurethans mit Alkylierungsmitteln oder anorganischen bzw. organischen Säuren umgesetzt werden. Dabei ist es grundsätzlich gleichgültig, an welcher Stelle des Polyurethanmakromoleküls sich die basischen Stickstoffatome befinden.

Man kann umgekehrt auch Polyurethane mit reaktiven, zur Quarternierung befähigten Halogenatomen mit tertiären Aminen umsetzen. Weiterhin lassen sich kationische Polyurethane auch unter kettenaufbauender Quarternierung herstellen, indem man z.B. aus gegebenenfalls höhermolekularen Diolen und Isocyanaten mit reaktiven Halogenatomen oder Diisocyanaten und Halogenalkoholen Dihalogenurethane herstellt und diese mit ditertiären Aminen umsetzt. Umgekehrt kann man aus Verbindungen mit zwei Isocyanatgruppen und tertiären Aminoalkoholen ditertiäre Diaminourethane herstellen und diese mit reaktionsfähigen Dihalogenverbindungen umsetzen. Selbstverständlich kann die kationische Polyurethanmasse auch aus einer kationischen salzartigen Ausgangskomponente, etwa einem quarternierten basischen Polyether oder einem quartären Stickstoff enthaltenden Isocyanat hergestellt werden. Diese Herstellungsmethoden sind z.B. in den Deutschen Auslegeschriften 1 184 946, 1 178 586 und 1 179 363, der US-Patentschrift 3 686 108 und den belgischen Patentschriften 653 223, 658 026, 636 799 beschrieben. Dort sind auch die zum Aufbau der salzartigen Polyurethane geeigneten Ausgangsmaterialien aufgeführt.

Die Herstellung von anionischen Polyurethandispersionen kann ebenfalls nach an sich bekannten Verfahren erfolgen. Geeignete anionische Polyurethane werden beispielsweise in der DAS 1 237 306, der DOS 1 570 565, der DOS 1 720 639 und der DOS 1 495 847 beschrieben. Vorzugsweise werden dabei Ausgangsverbindungen eingesetzt, welche als ionische Gruppen Carboxyl- oder Sulfonatgruppen aufweisen.

Man kann bei der Herstellung der anionischen Dispersionen auch von Polyurethanen mit freien Hydroxyl- und/oder Aminogruppen ausgehen und diese mit aliphatischen oder aromatischen Aldehyden und gleichzeitig oder anschließend mit einem Metallsulfit, Metallhydrosulfit, Metallaminocarboxylat oder Metallaminosulfat umsetzen. Eine weitere Möglichkeit besteht schließlich darin, Polyurethane mit freien Hydroxyl- und/oder Aminogruppen mit cyclischen Verbindungen mit 3—7 Ringgliedern umzusetzen, die salzartige oder nach der Ringöffnung zur Salzbildung befähigte Gruppen aufweisen (siehe DAS 1 237 306). Dazu gehören insbesondere Sultone wie 1,3 - Propansulton, 1,4 - Butansulton oder 1,8 - Naphthsulton und Lactone wie β - Propiolacton oder γ - Butyrolacton sowie Dicarbonsäureanhydride, z.B. Bernsteinsäureanhydrid.

Für das erfindungsgemäße Verfahren geeignete kationische oder anionische Polyurethane können auch gemäß DAS 1 770 068 über eine Formaldehyd-Polykondensation aufgebaut werden. Man setzt dabei höhermolekulare Polyisocyanate mit einem Überschuß an Verbindungen mit endständigen Methylolgruppen (z.B. Amin-Formaldehydharzen oder Phenol-Formaldehydharzen) um, dispergiert das Methylolgruppen aufweisende Reaktionsprodukt in Wasser und vernetzt schließlich durch Wärmebehandlung unter Bildung von Methylenbrücken.

Es ist auch möglich, aber weniger bevorzugt, im erfindungsgemäßen Verfahren Produkte einzusetzen, wie sie in den deutschen Offenlegungsschriften Nr. 1 953 345, 1 953 348 und 1 953 349 beschrieben werden. Es handelt sich dabei um wäßrige Dispersionen von ionischen Emulsionspolymerisaten, die durch radikalische Emulsionspolymerisation von olefinisch ungesättigten Monomeren in Gegenwart von kationischen oder anionischen Oligo- bzw. Polyurethanen hergestellt werden.

Man kann erfindungsgemäß auch (jedoch ebenfalls weniger bevorzugt) sedimentierende, aber redispergierbare wäßrige Dispersionen von kationischen bzw. anionischen Polyurethanen einsetzen, die chemisch vernetzt sind.

Die Herstellung derartiger vernetzter Polyurethan-Teilchen kann nach verschiedenen, dem Fachmann im Prinzip bekannten Methoden erfolgen. Allgemein kann man vernetzte Polyurethan-Teilchen sowohl als Suspension in geeigneten organischen Lösungsmitteln oder auch in Wasser unter Zuhilfenahme eines flüssigen Mediums herstellen. Weiterhin kann man im Rahmen jedes dieser Verfahren durch Wahl geeigneter Reaktionskomponenten direkt zu vernetzten Teilchen kommen oder zunächst überwiegend linear aufgebaute thermoplastische Teilchen herstellen und diese anschließend vernetzen.

Zur Herstellung einer Suspension in einem organischen Medium wählt man im allgemeinen ein solches Lösungsmittel, in welchem sich zwar einer oder auch mehrere der Reaktionspartner lösen, nicht aber das hochmolekulare Reaktionsprodukt. Im Laufe der Reaktion in einem solchen Medium geht die zunächst gebildete Lösung allmählich in eine Suspension über, wobei dieser Vorgang zweckmäßigerweise durch Rühren unterstützt wird. Wesentlich ist, daß der Vernetzungsvorgang erst nach Ausbildung der dispersen Phase einsetzt, da sonst Verquallung erfolgt.

Man kann auch solche Lösungsmittel verwenden, welche das noch unvernetzte, aber bereits hochmolekulare Polyurethan in der Hitze lösen, nicht aber bei Raumtemperatur. Die Suspension kann dann durch Abkühlen unter Rühren aus der Lösung erhalten werden. Derselbe Effekt kann auch durch Zugabe eines Nichtlösers erzielt werden, wobei jedoch der Nichtlöser mit dem Lösungsmittel mischbar sein soll. Die Ausbildung einer dispersen Phase mit gewünschter Teilchengröße kann durch Zusatz geeigneter Dispergatoren beeinflußt werden.

Zur Herstellung feinteiliger Polyurethane in wäßrigen Medien sind eine Vielzahl von Verfahren bekannt. So kann man beispielsweise die Lösung eines Polyurethans in einem nicht mit Wasser mischbaren Lösungsmittel unter Mitverwendung eines Emulgators in Wasser dispergieren und das organische Lösungsmittel destillativ entfernen. Eine besonders bevorzugte Methode besteht darin, ionisch und/oder hydrophil modifizierte Polyurethane mit oder ohne Lösungsmittel mit Wasser zu vermischen, wobei sich in Abhängigkeit von der Konstitution und den Reaktionsbedingungen Polyurethan-Suspensionen bilden. Eine ganz besonders bevorzugte Variante dieses Verfahrens besteht darin, Polyurethan-präpolymere mit endständigen Isocyanat- oder Methylol-Gruppen einzusetzen, wobei man sehr hochprozentige Lösungen verwenden oder auch ganz lösungsmittelfrei arbeiten kann. Die primär gebildeten groben Emulsionen gehen durch Reaktion der Isocyanatgruppen mit Wasser oder in der wäßrigen Phase gelösten Di- oder Polyaminen unter Kettenverlängerung und Vernetzung in hochmolekulare Polyurethan-harnstoff-suspensionen über.

Die Kettenverlängerung von Methylolgruppen enthaltenden Präpolymeren kann beispielsweise durch Erwärmen oder Erniedrigung des pH-Wertes erzielt werden.

Auch durch Eindüsen von hochmolekularen Polyurethanen oder deren reaktiven Vorläufen in Wasser oder organische Nichtlöser lassen sich geeignete Suspensionen herstellen.

Prinzipiell sind alle zur Herstellung von Polyurethan-Dispersionen oder Latices vorgeschlagenen Methoden auch zur Herstellung von Polyurethan-Suspensionen geeignet, sofern Sorge dafür getragen wird, daß diese Suspensionen nicht durch Sedimentieren oder Scherkräfte koaleszieren. Dies bedeutet, daß eine noch nicht ausreichend hochmolekulare Primär-Suspension solange in Bewegung gehalten werden sollte, bis die dispergierten Teilchen klebfrei geworden sind. Zur Vernetzung der dispergierten Teilchen kann man entweder von mehr als bifunktionellen Ausgangsmaterialien ausgehen, also z.B. verzweigte Polyester oder Polyether, Triisocyanate oder Triole beim Aufbau des Polyurethans (mit)verwenden oder ein zunächst lineares, also aus bifunktionellen Komponenten hergestelltes NCO-Präpolymer mit höherfunktionellen Aminen zu einem vernetzten Polyurethan-harnstoff umsetzen. Man kann aber auch aus rein bifunktionellen Komponenten vernetzte Partikel aufbauen, indem man unter Bedingungen arbeitet, die Verzweigungen bewirken, z.B. durch Zusatz von Katalysatoren, welche die Isocyanat-Trimerisierung oder die Bildung von Allophanat- bzw. Biuret-Strukturen begünstigen.

In Gegenwart von Wasser und/oder Diaminen führt häufig auch schon die Verwendung von gegenüber den vorhandenen Hydroxyl- bzw. Aminverbindungen mehr als äquivalenten Mengen Isocyanat zu einer Vernetzung.

Auch lineare hochmolekulare Polyurethane können in Form einer Suspension in einem flüssigen Medium nachträglich vernetzt werden, z.B. durch Behandlung mit Polyisocyanaten oder Formaldehyd bzw. Formaldehyd abspaltenden Verbindungen. Produkte, welche basische Gruppen enthalten, können beispielsweise mit polyfunktionellen Quarternierungsmitteln oder Säuren vernetzt werden, Produkte, die acide Gruppen enthalten, mit Metalloxiden oder Polyaminen. Zur Vernetzung von Polyurethanen, welche ungesättigte Doppelbindungen enthalten, eignen sich beispielsweise die an sich bekannten Radikalbildner bzw. Schwefel, Polymercaptane und andere zur Reaktion mit Doppelbindungen befähigte, zumindest bifunktionelle Agentien.

Eine detaillierte Beschreibung der Herstellung von vernetzten ionischen Polyurethansuspensionen findet sich z.B. in den Deutschen Auslegeschriften Nr. 1 495 745 (US-Patent 3 479 310), 1 282 962 (Kanad. Patent Nr. 837 174) und 1 694 129 (Britisches Patent Nr. 1 158 088) sowie den Deutschen Offenlegungsschriften Nr. 1 595 687 (US-Patent 3 814 095), 1 694 148 (US-Patent 3 622 527), 1 729 201 (Britisches Patent Nr. 1 175 339) und 1 770 068 (US-Patent Nr. 3 756 992).

Man kann für das erfindungsgemäße Verfahren, wie schon erwähnt, neben kationischen und anionischen Polyurethandispersionen auch nichtionische selbst-emulgierende wäßrige Polyurethandispersionen einsetzen.

Die Herstellung von für das erfindungsgemäße geeigneten nichtionischen emulgatorfreien Polyurethandispersionen erfolgt beispielsweise nach dem Verfahren der DE—OS—2 141 807:

1 Mol eines trifunktionellen Polyetherpolyols wird mit 3 Mol Diisocyanat zur Reaktion gebracht. Das entstehende Isocyanatgruppen enthaltende Addukt wird so mit einem Gemisch aus

a) einem monofunktionellen niedermolekularen Alkohol und

b) einem Umsetzungsprodukt eines monofunktionellen Alkohols oder einer Monocarbonsäure und Ethylenoxid (Molekulargewicht ca. 600)

umgesetzt, daß ein Vorpolymerisat entsteht, welches auf ungefähr 3000 Molekulargewichtseinheiten ein Mol des monofunktionellen Polyethylenoxidaddukts enthält. Dieses Vorpolymerisat wird unter Zuhilfenahme mechanischer Dispergiervorrichtungen in Wasser zu einem Latex emulgiert, der der endgültigen Polymerisation durch Reaktion mit Wasser oder einem anderen aus der Polyurethan-Chemie bekannten Kettenverlängerungsmittel unterzogen wird.

Selbstdispergierbare, nichtionische Polyurethandispersionen, die im erfindungsgemäßen Verfahren eingesetzt werden könne, lassen sich gemäß Deutschen Offenlegungsschriften 2 314 512, 2 314 513 und 2 320 719 auch herstellen, indem man in lineare Polyurethane über Allophanat- oder Biuretgruppen gebundene seitenständige Polyethylenoxideinheiten einbaut.

Die Herstellung dieser in Wasser selbst dispergierbaren Polyurethane erfolgt nach den an sich bekannten Methoden der Polyurethan-Chemie durch Umsetzung von im Sinne der Isocyanat-Polyadditionsreaktion difunktionellen, endständige gegenüber Isocyanatgruppen reaktionsfähige Gruppen aufweisenden, organischen Verbindungen des Molekulargewichtsbereiches 500 bis 6000, vorzugsweise 600 bis 3000, mit organischen Diisocyanaten und gegebenenfalls den in der Polyurethan-Chemie an sich bekannten difunktionellen Kettenverlängerungsmitteln mit einem Molekulargewicht unter 500. Wesentlich ist hierbei die (Mit)verwendung von organischen Diisocyanaten der allgemeinen Formel

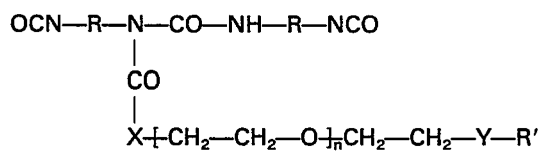

wobei

R für einen organischen Rest steht, wie er durch Entfernung der Isocyanatgruppen aus einem organischen Diisocyanat des Molekulargewichtsbereiches 112 bis 1000 erhalten wird,

R′ für einen einwertigen Kohlenwasserstoffrest mit 1 bis 12 Kohlenstoffatomen steht,

X und Y gleiche oder verschiedene Reste darstellen und für Saurestoff oder einen Rest der Formel —N(R″)— stehen, wobei R″ für einen einwertigen Kohlenwasserstoffrest mit 1 bis 12 Kohlenstoffatomen steht und

n eine ganze Zahl von 9 bis 89 bedeutet.

Diese speziellen Diisocyanate werden vorzugsweise im Gemisch mit nicht modifizierten Diisocyanaten der allgemeinen Formel $R(NCO)_2$ eingesetzt, wobei die zum Einsatz gelangenden Diisocyanat-Gemische 5 bis 100, vorzugsweise 10 bis 50 Mol.-% an modifizierten Diisocyanaten enthalten sollen.

Es ist auch möglich, selbstdispergierbare, nichtionische Polyurethandispersionen zu erhalten, wenn man Polyethylenoxid-Seitenketten über die Diolkomponenten einführt. Neben den oben genannten höhermolekularen Diolen, Diisocyanaten der Formel $R(NCO)_2$ und gegebenenfalls Kettenverlängerungsmittel werden dabei auch Diole der allgemeinen Formel

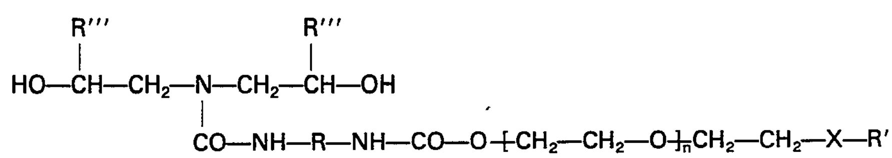

mitverwendet, in welcher

R einen zweiwertigen Rest darstellt, wie er durch Entfernung der Isocyanatgruppen aus einem Diisocyanat des Molekulargewichts 112 bis 1000 erhalten wird,

X für Saurestoff oder —NR″— steht,

R′ und R″ gleich oder verschieden sind und für einwertige Kohlenwasserstoffreste mit 1 bis 12 Kohlenstoffatomen stehen,

R‴ für Wasserstoff oder einen einwertigen Kohlenwasserstoffrest mit 1 bis 8 Kohlenstoffatomen steht und

n eine ganze Zahl von 4 bis 89 bedeutet.

Im erfindungsgemäßen Verfahren können auch Dispersionen verwendet werden, die mit Hilfe von Emulgatoren hergestellt wurden. Produkte dieser Art sind beispielsweise im der DAS 1 097 673 und in einem Referat von S.P. Suskind im Journal of Applied Polymer Science, *9* (1965), Seite 2451—2458 beschrieben.

Bevorzugt werden im erfindungsgemäßen Verfahren wäßrige Polyurethandispersionen verwendet, welche durch ionische und nichtionisch-hydrophile Gruppen modifiziert sind. Durch diese Kombination wird vorteilhafterweise auch in Abwesenheit von Alkoholen eine ausreichende Elektrolytstabilität erzielt. Die Herstellung derartiger Polyurethandispersionen ist ebenfalls an sich bekannt und z.B. in den DE—OS—2 551 094, 2 651 506 und 2 651 505 beschrieben. Als Zusatz zu den wäßrigen Polyurethandispersionen können auch wäßrie Polymerlatices, die nicht zur Koagulation neigen, mitverwendet werden, z.B. Acrylatdispersionen und Polyvinylacetatdispersionen.

Im allgemeinen verfährt man bei der Herstellung von ionisch/nichtionisch-hydrophilen Polyurethanen so, daß zum Aufbau der hochmolekularen Polyurethane bifunktionelle, lineare Polyether oder Polyester mit einem Molekulargewicht von ca. 400 bis 10000 in Gegenwart von nichtionischhydrophilen Modifizierungskomponenten und gegebenenfalls Kettenverlängerungsmitteln und ionisch hydrophilen Komponenten der oben diskutierten Art mit Diisocyanaten zu Prepolymeren umgesetzt werden, welche im Anschluß daran meist in einem Lösungsmittel, bevorzugt Aceton, mit einem Kettenverlängerungsmittel wie Diaminen und/oder Hydrazin bzw. gegebenenfalls deren Alkiminen, Ketiminen oder Aldazinen bzw. Ketazinen zu einem hochmolekularen Polyurethan umgesetzt werden. Anschließend wird die acetonische Lösung des hochmolekularen Polyurethans mit Wasser vermischt und das Aceton abdestilliert. Insbesondere bei Anwendung des sog. Ketiminverfahrens können die wäßrigen Polyurethandispersionen auch nach dem Schmelzdispergierverfahren hergestellt werden.

Die Einführung der ionischen Gruppen bzw. der in ionische Gruppen überführbaren Gruppen in die erfindungsgemäß bevorzugten ionisch/nichtionisch hydrophilen Polyurethane geschieht ebenfalls in an sich bekannter Weise durch Mitverwendung von ionischen Gruppen bzw. in ionische Gruppen überführbare Gruppen aufweisenden Verbindungen, welche gleichzeitig Isocyanatgruppen oder vorzugsweise mit gegenüber Isocyanatgruppen reaktionsfähige Gruppen wie insbesondere alkoholische Hydroxylgruppen enthalten, wie sie oben ausführlich beschrieben sind. Falls die Einführung von freien Carboxylgruppen als potentielle anionische Gruppen erwünscht ist, empfiehlt sich die Mitverwendung von Verbindungen, die neben freien Carboxylgruppen gegenüber Isocyanatgruppen stärker reaktive Gruppen, insbesondere Hydroxylgruppen, aufweisen. Ein typisches Beispiel einer derartigen Aufbaukomponente ist die Dimethylolpropionsäure, die bei Raumtemperatur oder mäßig erhöhter Temperatur mit organischen Polyisocyanaten selektiv unter ausschließlicher Bildung von Urethangruppen und Beibehaltung der freien Carboxylgruppe abreagiert.

Die in den erfindungsgemäß bevorzugt als Elastifizierungsmittel zu verwendenden Polyurethanen vorliegenden, innerhalb von Polyetherketten eingebauten Ethylenoxideinheiten werden vorzugsweise durch Mitverwendung von seitenständige oder endständige Ethylenoxideinheiten enthaltenden Alkoholen und/oder durch Mitverwendung von derartige Polyalkylen-Seitenketten aufweisenden Diisocyanaten bei der Herstellung der Polyurethane eingeführt.

Derartige, Ethylenoxideinheiten enthaltende Polyalkylenoxid-Ketten aufweisende Aufbaukomponenten sind beispielsweise in den zum Teil schon oben genannten DE—OS—2 314 512, DE—OS—2 651 506, DE—OS—2 314 513, US—PS—3 920 598 und US—PS—3 905 929 beschrieben.

Eine weitere Möglichkeit zur Einführung von Ethylenoxideinheiten besteht in der Mitverwendung von Polyetherpolyolen, welche eine entsprechende Anzahl solcher Einheiten aufweisen.

Die beispielhaft genannten hydrophilen bzw. potentiell hydrophilen Aufbaukomponenten werden bei der Herstellung der erfindungsgemäß zu verwendenden Polyurethane in solchen Mengen mitverwendet, daß die Dispergierbarkeit in Wasser gewährleistet ist. Hierzu können, wie schon erwähnt, sowohl ionische bzw. potentiell ionische als auch nicht-ionisch hydrophile Gruppen der beispielhaft genannten Art als auch vorzugsweise beide Arten an hydrophilen Gruppierungen gleichzeitig eingebaut werden. Der Gehalt der erfindungsgemäß zu verwendenden Polyurethane an den genannten hydrophilen Gruppierungen liegt bei der alleinigen Verwendung von ionischen Gruppen bzw. von in ionische Gruppen überführbaren Gruppen als hydrophile Gruppen vorzugsweise bei 30 bis 130 Milliäquivalenten an solchen Gruppen pro 100 g Polyurethanfeststoff bzw. bei der alleinigen Verwendung von Ethylenoxideinheiten als hydrophile Gruppierungen in der Regel bei 2 bis 20 Gew.-%, vorzugsweise bei 8 bis 16 Gew.-% an innerhalb von Polyetherketten eingebauten Ethylenoxideinheiten.

Falls beide Arten von hydrophilen Gruppen vorliegen, liegen in den Polyurethanen vorzugsweise 0,1 bis 40 Milliäquivalente/100 g an ionischen Gruppen oder an in ionische Gruppen überführbaren Gruppen und gleichzeitig 0,5 bis 10 Gew.-% an innerhalb von Polyetherketten eingebauten Polyethylenoxideinheiten vor.

Falls die Dispergierbarkeit der Polyurethane teilweise oder ausschließlich durch den Einbau von potentiellen ionischen Gruppen gewährleistet ist, muß selbstverständlich vor oder während des Dispergiervorgangs der Polyurethane für eine zumindest teilweise Überführung der potentiellen ionischen Gruppen in ionische Gruppen Sorge getragen werden, so daß der Gehalt der dispergiert vorliegenden Polyurethane an ionischen Gruppen den oben genannten Bedingungen entspricht. Derartige Polyurethane, deren Dispergierbarkeit teilweise oder ausschließlich durch die Anwesenheit von potentiellen ionischen Gruppen gewährleistet ist, sind, strenggenommen, selbstverständlich nicht in Wasser, sondern lediglich in Wasser dispergierbar, das ein entsprechendes Neutralisationsmittel enthält.

Wie schon erwähnt, haben die erfindungsgemäß bevorzugt einzusetzenden, gleichzeitig ionische und nichtionische hydrophile Gruppen aufweisenden Polyurethane ebenso wie rein nichtionische Polyurethane

den Vorteil, daß ihre Dispersionen in Wasser ausreichend elektrolytstabil sind, d.h. in Kontakt mit dem gebrannten Gips nicht koagulieren.

Bei der Verwendung von nur durch Einbau ionischer Gruppen wasserdispergierbar gemachter Polyurethane ist es jedoch in der Regel, um ein Koagulieren des Polyurethans zu vermeiden, erforderlich, im Ansatz bis zu 20 Gew.-%, vorzugsweise 1 bis 10 Gew.-% (bezogen auf Gesamtgemisch) mindestens eines wasserlöslichen Alkohols wie z.B. Methanol, Ethanol, Propanol, t-Butanol, Glycerin, Formose, Formit oder Polyvinylalkoholpulver (bevorzugt Ethanol) mitzuverwenden. Außerdem kann der Ansatz noch bis zu 20 Gew.-% an anderen (z.B. aus der Herstellung der Polyurethandispersionen stammenden) organischen Lösungsmitteln enthalten, z.B. Aceton, Methylethylketon, Dimethylformamid oder N-Methylpyrrolidon. Es ist jedoch dafür Sorge zu tragen, daß derartige organische Lösungsmittel—ebenso wie gegebenenfalls mitverwendete flüchtige Alkohole—während des Abbindevorgangs entweichen können, da andernfalls der ausgehärtete Verbundwerkstoff nur unzureichende mechanische Festigkeit aufweist.

Bei der Herstellung von Stützverbänden für die medizinische Anwendung werden vorzugsweise handelsübliche Gipsbinden in einer wäßrigen Polyurethandispersion getränkt und nach den herkömmlichen Techniken verarbeitet. Auch hier zeigt sich die gute Wasserfestigkeit der mit Polyurethan modifizierten Gips-Stützverbände an einem einfachen Versuch. Taucht man eine Gipsbinde in eine 5 Gew.-% Polyurethanharnstoff enthaltende wäßrige Dispersion und wickelt auf einer Papphülse einen etwa 0,5 cm dicken Stützverband, läßt diesen abbinden und stellt den Polyurethan-Gips-Probestützverband ebenso wie einen nicht mit Polyurethan modifizierten Gipsverband anschließend in eine Wasserschale, deren Wasserspiegel 12 mm hoch ist, so zeigt sich, daß das Wasser, bedingt durch die Kapillarwirkung, nach 3 Stunden bei dem herkömmlichen Gipsverband bis auf eine Höhe von 72 mm aufgesogen wurde, während der Polyurethan-Gips-Stützverband lediglich eine Wassersteighöhe von 16 mm aufweist.

Auch der Zusatz von Füllstoffen und Farbstoffen ist möglich. Als Füllstoffe kommen z.B. im Betracht: bis zu 10 Gew.-% (bezogen auf Gesamtgemisch) an anderen wäßrigen Polymerlatices, Kieselgur, Bimsstaub, Ruß, Schlämmkreide, Schiefermehl, Glaswolle und Aluminiumpulver, silikatische Materialien wie Ton, Alumosilikate, Kaoline, fein verteilter Glimmer, Glasfasern, Baumwollfasern, Polyamid und Polyacrylnitrilfasern, Cellulosefasern, Polyesterfasern, Holzmehl, Baumwollinters, Polymethylenharnstoffe, Titandioxid, Aluminiumoxidhydrat, feinverteiltes Blei, Bleioxide, Eisenoxide und Azulminsäure, Stärke, Papier, insbesondere zerfasertes Altpapier. Als Farbstoffe kommen z.B. in Betracht: Azofarbstoffe, Anthrachinonfarbstoffe, Pigmentfarbstoffe, Phthalocyaninfarbstoffe, optische Aufheller, fluoreszierende und lumineszierende Farbstoffe.

Die erfindungsgemäße Mitverwendung von Ethanol oder anderen Alkoholen zur Steuerung der Abbindezeiten der Polyurethan-Gips-Verbundwerkstoffe ist ebenfalls äußerst überraschend. So erhält man bei der Mischung von 100 g $CaSO_4 \cdot 0{,}5\ H_2O$ mit 100 g einer 50%igen wäßrigen Polyurethanharnstoffdispersion, welche $SO_3$-Gruppen und Polyetherendgruppen enthält—hergestellt gemäß DE—OS—2 651 506—und 20 ml Ethanol eine homogene Mischung, die nach Ausgießen auf eine Teflonplatte innerhalb von 15 Minuten abbindet. Nach 2 Tagen erreicht der Verbundwerkstoff seine Endeigenschaften hinsichtlich Bruch- und Wasserfestigkeit. Mischt man dagegen 100 g $CaSO_4 \cdot 0{,}5\ H_2O$ mit 100 g der oben beschriebenen 50%igen Dispersion ohne den Zusatz von Ethanol, so bindet der Verbundwerkstoff ähnlich wie reiner Gips bereits nach 3 Minuten ab. Nach 2 Tagen besitzt der so entstandene Verbundwerkstoff Endeigenschaften, die nicht ganz so optimal sind wie diejenigen einer mittels Ethanol in ihrer Abbindung verzögerten Probeplatte.

Wie überraschend die erfindungsgemäße Verwendung von wäßrigen Polyurethandispersionen zur Herstellung von anorganisch/organischen Verbundwerkstoffen im Vergleich zu anderen wäßrigen Dispersionen organischer Polymerer ist, zeigen weiterhin folgende Versuche:

Wäßrige handelsübliche Acrylatdispersionen, z.B. Impranil® AW und Impranil® AM (Handelsprodukte der Bayer AG) lassen sich mit $CaSO_4 \cdot 0{,}5\ H_2O$ zwar anrühren, die Abbindung des Gipses wird jedoch verhindert und es entstehen quarkartige Massen. Eine Elastifizierung von Gips ist auf diese Weise nicht möglich. Ebenso unmöglich ist es, wäßrige Kautschuklatices (z.B. Baypren®) zur Elastifizierung von Gips einzusetzen. Bei diesen Versuchen werden die in Wasser dispergierten Kautschukteilchen durch den Gipszusatz sofort koaguliert—eine Mischung mit dem Gips ist gar nicht möglich.

Beispiele

Bei den in den Beispielen verwendeten Gipssorten handelt es sich—wenn nicht ausdrücklich anders vermerkt—um gebrannten Gips der chemischen Zusammensetzung $CaSO_4 \cdot 0{,}5\ H_2O$ (Calciumsulfatgebrannt, reinst, DAB 8, BPC 1983, Ph. Belg. IV, F VII. Helv. V. Handelsprodukt der Firma E. Merck, Darmstadt). Dieser Gips soll stellvertretend für alle möglichen anderen handelsüblichen Gipssorten stehen. Die Ergebnisse lassen sich im Prinzip auch auf den sog. Anhydrit—$CaSO_4$—übertragen, wenn auch dessen Abbindezeiten erheblich länger sind.

Die Abbindezeiten der verschiedenen Gipssorten unterscheiden sich je nach Zuschlagstoff erheblich.

| | | Abbindezeit |
|---|---|---|
| A) | 50 g $CaSO_4 \cdot 0,5\ H_2O$+30 g $H_2O$ | ca. 5 min |
| B) | 50 g Silogips®+30 g $H_2O$ (α-Gips) | ca. 30 min |
| C) | 50 g Supraduro®+30 g $H_2O$ (β-Gips) | ca. 35 min |
| D) | 50 g Stuckgips+30 g $H_2O$ (DIN 1168) | ca. 30 min |
| E) | 50 g Moldano®+30 g $H_2O$ (zahnärztlicher Gips) | ca. 10 min |
| F) | 50 g Moldaroc®+30 g $H_2O$ (zahnärztlicher Gips) | ca. 16 min |

B, C, E, F=Handelsprodukte der Bayer AG

Einen Überblick über die verschiedensten Gipssorten gibt z.B. Karl Eichner, Zahnärztliche Werkstoffe und ihre Verarbeitung, 3. Auflage 1974, S. 7—21, Dr. Alfred Hüthig Verlag, Heidelberg, sowie H. Römpp, Chemielexikon 907—910, 342—344, Franckh'sche Verlagshandlung Stuttgart, 1966.

Die zur Modifizierung in den nachstehenden Beispielen 1 bis 7 eingesetzte wäßrige Polyurethanharnstoffdispersion wurde gemäß Beispiel 1 von DE—OS—2 651 506 hergestellt. Die Dispersion besitzt einen Feststoffanteil von 50% und enthält ca. 3 Gew.-% Polyethylenoxidsegmente und 3 m Äquivalente Sulfonatgruppen/100 g Feststoff.

Vergleichsbeispiel 1

100 g fein gepulvertes $CaSO_4 \cdot 2\ H_2O$ werden mit 55 g $H_2O$, 20 ml Ethanol und 10 g der 50%igen wäßrigen Polyurethanharnstoffdispersion gemischt und auf eine Teflonplatte ausgegossen. Die zunächst homogene weiße Masse zerfällt nach Trocknen über Nacht durch entstehende Risse in kleine, inhomogene Stücke. Es entsteht kein Verbundwerkstoff aus Polyurethan und Gips.

Vergleichsbeispiel 2

50 g $CaSO_4 \cdot 0,5\ H_2O$ werden mit 30 ml $H_2O$ gemischt und bei Raumtemperatur und Normaldruck getrocknet. Nach dem Abbinden (5 min) und Trocknen (3 Tage) besitzt der Gips die Masse 59,3 g; das entspricht einer chemischen Zusammensetzung von $CaSO_4 \cdot 2\ H_2O$.

Dieser Gips wird anschließend zerkleinert und fein gemahlen. Danach wird das feine Gipspulver mit 50 g der 50%igen wäßrigen Polyurethanpolyharnstoffdispersion und 20 ml Ethanol gemischt und auf eine Teflonplatte gegossen. Nach wenigen Tagen entsteht durch Verdunsten des Wassers und des Ethanols ein füllstoffhaltiger Polyurethanharnstoff mit einer uneinheitlichen Struktur und und uneinheitlicher Oberfläche. Die Eigenschaften des Polyurethans sind durch den toten Füllstoff wesentlich verschlechtert, es entsteht kein homogener PUR-Gips-Verbundwerkstoff.

Vergleichsbeispiel 3

A) 100 g einer 25%igen Lösung eines Polyurethanpolyharnstoffs in Toluol/Isopropanol (7:3), hergestellt gemäß DE—OS—2 644 434, werden mit 5 g $H_2O$ und 25 ml Ethanol gemischt. Es entsteht eine klare Lösung. In diese Lösung werden dann 25 g $CaSO_4 \cdot 0,5\ H_2O$ zugegeben, die Mischung gut verrührt und ausgegossen. Nach 2 Tagen entsteht ein brüchiges, inhomogenes Material, aber kein homogener Verbundwerkstoff.

B) 50 g der oben beschriebenen 50%igen Polyurethanlösung in Toluol/Isopropanol werden mit 100 g $CaSO_4 \cdot 0,5\ H_2O$ gemischt. Dabei entsteht eine hochviskose, spachtelbare Masse. In diese Masse werden 20 g Wasser gegeben, die sich nach wenigen Sekunden Rühren gut im Gemisch verteilen. Nach ca. 6 Minuten bindet der Gips ab, was sich durch die auftretende Wärmetönung bemerkbar macht. Nach einer Woche Lagerzeit ist die Mischung immer noch brüchig und zerfällt bei der geringsten mechanischen Beanspruchung.

Vergleichsbeispiel 4

50 g einer 40%igen wäßrigen Acrylatdispersion Impranil® AW (Handelsprodukt der Bayer AG) werden mit 50 g $CaSO_4 \cdot 0,5\ H_2O$ gemischt. Nach mehreren Stunden entsteht eine quarkartige Masse, die oberflächlich trocknet, im Innern jedoch nicht abbindet.

Vergleichsbeispiel 5

50 g einer 50%igen wäßrigen Kautschukdispersion Baypren® (Handelsprodukt der Bayer AG) werden mit 50 g $CaSO_4 \cdot 0,5\ H_2O$ versetzt. Der Kautschuklatex koaguliert spontan.

Erfindungsgemäße Beispiele

Beispiel 6

Die nachfolgend genannten Komponenten werden gemischt und auf eine Teflonplatte ausgegossen. Es entstehen die erfindungsgemäßen PUR-Gips-Verbundwerkstoffe, die nach 2 Tagen Lufttrockung einer Wasserlagerung unterzogen werden.

| | Versteifungszeit | Entformungszeit |
|---|---|---|
| A) 100 g $CaSO_4 \cdot 0{,}5\ H_2O$<br>100 g PUR-Dispersion | 3 min | 6 min |
| B) 100 g $CaSO_4 \cdot 5\ H_2O$<br>100 g PUR-Dispersion+<br>10 g $H_2O$ | 3 min | 6 min |
| C) 100 g $CaSO_4 \cdot 0{,}5\ H_2O$<br>100 g PUR-Dispersion<br>20 ml Ethanol | 5 min | 15 min |
| Vergleich:<br>100 g $CaSO_4 \cdot 0{,}5\ H_2O$,<br>60 g $H_2O$ | 3 min | 3 min |

Die Abbindezeit von C ist am längsten. C ist jedoch schon im Biegeversuch mit der Hand wesentlich elastischer und fester als A und B.

Nach Wasserlagerung (12 h bei Raumtemperatur) besitzt C die größte Reißfestigkeit. Eine zum Vergleich in Wasser gelagerte Platte aus Standardgips fällt nach geringster mechanischer Belastung auseinander.

Wiegt man einen Probekörper des Gips-PUR-Verbundwerkstoffs C vor und nach der Wasserlagerung, so stellt man fest, daß der PUR-Gips-Verbund ca. 20 Gew.-% Wasser aufgenommen hat.

Nach Lagern an der Luft gibt dieser Probekörper das aufgenommene Wasser wieder vollständig ab, so daß er nach 2 Tagen sein ursprüngliches Gewicht und seine ursprüngliche Elastizität wieder besitzt.

Beispiel 7

Eine handelsübliche Gipsbinde der Marke ZOROC® der Firma Johnson & Johnson wird nach Vorschrift des Herstellers im Wasser getränkt und auf eine Papphülse (10 cm Durchmesser · 13 cm Höhe) gewickelt. Bei der Aushärtung entsteht ein Formkörper analog zu den in der medizinischen Anwendung gebräuchlichen Gips-Stützverbänden.

Eine zweite handelsübliche Gipsbinde (ZOROC®) wird in einer 5 Gew.-%igen PUR-Dispersion getränkt und ebenfalls auf eine Papphülse gewickelt. Es entsteht ein erfindungsgemäßer PUR-Gips-Verbundwerkstoff.

Eine dritte handelsübliche Gipsbinde (ZOROC®) wird in einer 20 gew.-%igen PUR-Dispersion getränkt und ebenfalls auf eine Papphülse gewickelt. Es entsteht ein erfindungsgemäßer PUR-Gips-Verbundwerkstoff. Zur Prüfung der Wasserfestigkeit werden die drei Probekörper nach zwei Tagen Lufttrocknung in eine Wanne mit Wasser gestellt (Eintauchtiefe: 12 mm).

Nach 3 Stunden wird die Steighöhe des Wassers ermittelt:

| % PUR | 0 | 5 | 20 |
|---|---|---|---|
| Steighöhe (mm) des Wassers durch Kapillarwirkung nach 3 Stunden | 72 | 23 | 16 |

**Patentansprüche**

1. Stützverbände für medizinische Anwendungen auf Basis von Gips und Polyurethanen, erhältlich durch Einwirkung einer wäßrigen Dispersion eines Polyurethan(harnstoffs), die gegebenenfalls bis zu 20 Gew.-% (bezogen auf die Dispersion) eines Alkohols und gegebenenfalls bis zu 20 Gew.-% (bezogen auf die Dispersion) an weiteren Lösungsmitteln enthält, auf gebrannten Gips, der auf einem textilen Trägermaterial aufgebracht worden ist, und Abbinden des Gipses, gegebenenfalls unter Formgebung, unter Verdampfung der gegebenenfalls mitverwendeten Lösungsmittel.

2. Stützverbände nach Anspruch 1, dadurch gekennzeichnet, daß die wäßrige Polyurethan(harnstoff)dispersion einen Feststoffgehalt von 1 bis 60 Gew.-%, bevorzugt 5 bis 50 Gew.-%, aufweist.

3. Stützverbände nach Anspruch 1 und 2, dadurch gekennzeichnet, daß die Polyurethan(harnstoff) dispersion beim Auftrocknen einen klebfreien Film, vorzugsweise mit einer Kugeldruckhärte unter 138 mPa (1400 Kp/$cm^2$) bildet.

4. Stützverbände nach Anspruch 1 bis 3, dadurch gekennzeichnet, daß der Polyurethan(harnstoff) 2 bis 20 Gew.-%, vorzugsweise 8 bis 16 Gew.-% bezogen auf Feststoff, an in Polyetherketten eingebauten Ethylenoxideinheiten aufweist.

5. Stützverbände nach Anspruch 1 bis 4, dadurch gekennzeichnet, daß der Polyurethan(harnstoff) 30 bis 130 Milliäquivalente an ionischen Gruppen oder an in ionische Gruppen überführbaren Gruppen, bezogen auf 100 g Polyurethan(harnstoff), aufweist.

6. Stützverbände nach Anspruch 1 bis 5, dadurch gekennzeichnet, daß der Polyurethan(harnstoff) 0,1 bis 40 Milliäquivalente an ionischen Gruppen oder an in ionische Gruppen überführbaren Gruppen, bezogen auf 100 g Polyurethan(harnstoff) und 0,5 bis 10 Gew.-% an in Polyetherketten eingebauten Ethylenoxideinheiten aufweist.

7. Verfahren zur Herstellung von Stützverbänden für medizinische Anwendungen auf Basis von Gips und Polyurethanen, dadurch gekennzeichnet, daß man eine wäßrige Dispersion eines Polyurethan(harnstoffs), die gegebenenfalls bis zu 20 Gew.-% (bezogen auf die Dispersion) eines Alkohols und gegebenenfalls bis zu 20 Gew.-% (bezogen auf die Dispersion) an weiteren Lösungsmitteln enthält, auf gebrannten Gips, der auf einem textilen Trägermaterial aufgebracht worden ist, einwirken und den auf dem Trägermaterial aufgebrachten Gips, gegebenenfalls unter Formgebung, unter Verdampfung der gegebenenfalls mitverwendeten Lösungsmittel, abbinden läßt.

**Revendications**

1. Bandages de contention pour applications en médecine, à base de plâtre et de polyuréthannes, que l'on peut obtenir par l'action d'une dispersion aqueuse d'un polyuréthanne (urée), contenant éventuellement jusqu'à 20% en poids (sur la base de la dispersion) d'un alcool et éventuellement jusqu'à 20% en poids (sur la base de la dispersion) d'autres solvants, sur du sulfate de calcium calciné (plâtre), qui a été appliqué sur une matière textile de support, et prise du plâtre, éventuellement avec formage, et avec évaporation des solvants éventuellement co-utilisés.

2. Bandages de contention selon la revendication 1, caractérisés en ce que la dispersion aqueuse de polyuréthanne (urée) présente une teneur en matière sèche de 1 à 60% en poids, de préférence 5 à 50% en poids.

3. Bandages de contention selon la revendication 1 et 2, caractérisés en ce que la dispersion de polyuréthanne (urée) forme au séchage une pellicule dépourvue de pégosité, présentant avantageusement une dureté à l'empreinte d'une bille inférieure à 138 mPa (1 400 Kp/$cm^2$).

4. Bandages de contention selon les revendications 1 à 3, caractérisés en ce que le polyuréthanne (urée) présente 2 à 20% en poids, avantageusement 8 à 16% en poids, sur la base de la matière solide, de motifs oxyéthylène incorporés dans des chaînes polyéther.

5. Bandages de contention selon les revendications 1 à 4, caractérisés en ce que le polyuréthanne (urée) présente 30 à 130 méq. de groupes ioniques, ou de groupes transformables en des groupes ioniques, pour 100 g de polyuréthanne (urée).

6. Bandages de contention selon les revendications 1 à 5, caractérisés en ce que le polyuréthanne (urée) présente 0,1 à 40 méq. de groupes ioniques, ou de groupes transformables en des groupes ioniques, pour 100 g de polyuréthanne (urée), et 0,5 à 10% en poids de motifs oxyéthylène incorporés dans des chaînes polyéther.

7. Procédé pour préparer des bandes de contention pour des applications médicales, à base de plâtre et de polyuréthannes, procédé caractérisé en ce qu'on applique une dispersion aqueuse d'un polyuréthanne (urée), contenant éventuellement jusqu'à 20% en poids (sur la base de la dispersion) d'un alcool et éventuellement jusqu'à 20% en poids (sur la base de la dispersion) d'autre solvants, sur du sulfate de calcium calciné (plâtre), qui a été appliqué sur une matière textile de support, et on laisse le plâtre appliqué sur la matière de support, éventuellement avec mise en forme, faire prise avec évaporation du ou des solvants éventuellement co-utilisés.

**Claims**

1. Fixed dressings for medical applications based on gypsum and polyurethanes, obtainable by the action of an aqueous dispersion of a polyurethane(urea), which contains, where appropriate, up to 20% by weight (relative to the dispersion) of an alcohol and, where appropriate, up to 20% by weight (relative to the dispersion) of other solvents, on calcined gypsum which has been applied to a textile support material, and setting of the gypsum, where appropriate while shaping, while the solvent which has also been used where appropriate is evaporating.

2. Fixed dressings according to Claim 1, characterized in that the aqueous dispersion of polyurethane(urea) has a content of solids of 1 to 60% by weight, preferably 5 to 50% by weight.

3. Fixed dressings according to Claim 1 and 2, characterized in that the dispersion of

polyurethane(urea) forms, on drying out, a non-adhesive film, preferably having an indentation hardness below 138 mPa (1,400 Kp/cm$^2$).

4. Fixed dressings according to Claim 1 to 3, characterized in that the polyurethane(urea) has 2 to 20% by weight, preferably 8 to 16% by weight, relative to solids, of ethylene oxide units incorporated in polyether chains.

5. Fixed dressings according to Claim 1 to 4, characterized in that the polyurethane(urea) has 30 to 130 milliequivalents of ionic groups or of groups which can be converted into ionic groups, relative to 100 g of polyurethane(urea).

6. Fixed dressings according to Claim 1 to 5, characterized in that the polyurethane(urea) has 0.1 to 40 milliequivalents of ionic groups or groups which can be converted into ionic groups, relative to 100 g of polyurethane(urea), and 0.5 to 10% by weight of ethylene oxide units incorporated in polyether chains.

7. Process for the production of fixed dressings for medical applications based on gypsum and polyurethanes, characterized in that an aqueous dispersion of a polyurethane(urea) which contains, where appropriate, up to 20% by weight (relative to the dispersion) of an alcohol and, where appropriate, up to 20% by weight (relative to the dispersion) of other solvents is allowed to act on calcined gypsum which has been applied to a textile support material, and the gypsum applied to the support material is allowed to set, where appropriate while shaping, while the solvent which has also been used where appropriate is evaporating.